(19) Europäisches Patentamt
European Patent Office
Office européen des brevets

(11) Publication number: 0 156 597 A2

# (12) EUROPEAN PATENT APPLICATION

(21) Application number: 85301786.1

(22) Date of filing: 14.03.85

(51) Int. Cl.[4]: C 02 F 1/26

(30) Priority: 19.03.84 US 591282

(43) Date of publication of application: 02.10.85 Bulletin 85/40

(84) Designated Contracting States: BE DE FR GB IT NL

(71) Applicant: THE HALCON SD GROUP, INC.
2 Park Avenue
New York, N.Y. 10016(US)

(72) Inventor: Jacobson, Stephen E.
7 Ironwood Road
Morristown New Jersey 07960(US)

(72) Inventor: Naglieri, Anthony N.
32 Breton Drive
Pine Brook New Jersey 07058(US)

(74) Representative: Cropp, John Anthony David et al,
MATHYS & SQUIRE 10 Fleet Street
London, EC4Y 1AY(GB)

## (54) Process for the extraction of dilute amounts of carboxylic acids from liquid solutions.

(57) A process for the extraction of dilute amounts of carboxylic acids, particularly acetic acid, from liquid solutions involving contacting the acid containing solution in an acid extraction zone with an insoluble extractive support, which is preferably a crosslinked polystyrene resin, derivitised with a suitable amount of either trihydrocarbyl phosphine oxide or heterocyclic amine absorption sites.

EP 0 156 597 A2

## BACKGROUND OF THE INVENTION

### Field of the Invention

The present invention is related to the treatment of liquid solutions containing dilute amounts of carboxylic acids, and more particularly, is related to the substantial extraction of dilute amounts of acetic acid from aqueous streams. The process involves contacting a liquid stream with an extractive insoluble support possessing an effective amount of trihydrocarbyl phosphine oxide or heterocyclic amine sites, preferably dialkylbenzyl phosphine oxide, or N-hydrocarbyl imidazole-based sites.

### Description of the Prior Art

The separation of dilute amounts of organic acids, and particularly acetic acid, from various liquids, particularly water has been a major industrial concern for over a century and is of particular importance today due to the increased importance of environmental considerations. Additionally, the discharge of such acid waste represents the loss of a valuable chemical resource, as, for example, acetic acid is one of the most important industrial organic acids, with an excess of four billion pounds a year currently being produced and consumed worldwide. When the thermodynamic stability of acetic acid is considered, as well as its frequent production as an end product of many organic degradation reactions, its common occurrence in waste waters becomes both easily understandable and economically significant.

A great amount of effort has been spent in developing methods for the recovery of carboxylic acids, and particularly acetic acid, from liquid solutions, particularly very dilute solutions, e.g., containing about $10^{-3}$ to 5.0 wt. % acetic acid. In general, the straightforward distillation techniques which are frequently employed for the extraction of larger volumes of acetic acid from liquid, usually aqueous, streams are unsuitable for

low concentration solutions, due to the large energy requirements involved, even when employing entraining or azeotroping agents. Consequently, the art has investigated other extraction procedures in an effort to develop an effective and economic method of separating carboxylic acids and water. For example, U.S. Patent 2,395,010 is illustrative of such procedures and describes a process for the extraction of acetic acid from water through the use of amyl acetate as the extraction agent followed by subsequent distillation to recover the acetic acid product.

U.S. Patents 3,816,524, 3,980,701, 3,980,702, 3,980,703, 3,980,704, and 3,997,599 are also illustrative of the efforts of prior workers, describing a process whereby carboxylic acids are removed from dilute aqueous solutions through the use of dialkyl allyl phosphinates, trialkyl phosphine oxides, dialkyl alicyclic amidophosphates, dialkyl sulfoxides and tetralkyl ureas as extraction agents, preferably in combination with organic diluents such as kerosene, carbon tetrachloride, amyl acetate, toluene, ethyl benzyl ketone, dibutyl ether, benzonitrile, 2,2-dichloro propane, heptane, 1-nitrobutane, triethyl phosphite, 1-pentanol, ethoxy (triethyl) silanes and 1-fluoropentane. U.S. Patent 2,275,862 discloses a similar process using higher dialkyl ketone extractants, while U.S. Patent 2,446,231 employs ethyl disulfide as an extractant. U.S. Patent 4,153,809 discloses the separation of diglycolic acid from glycolic acid by a preferential extraction from an aqueous mixture of the two acids, using a water insoluble trihydrocarbyl phosphine oxide as the extraction agent.

The prior art involving the use of heterocyclic amines and, particularly N-hydrocarbyl imidazole derivatives as extractants of dilute amounts of carboxylic acids is negligible; U.S. Patent 4,218,568 mentions that formic

acid can be withdrawn from a hydrolysis equilibrium by imidazole derivatives, and later separated therefrom, U.S. Patent 4,430,445 discloses the use of imidazolemethyl-styrene polymers as ion exchange resins, while an article discussing the preparation and catalytic properties of imidazole ligands bound to polystyrene and its complexes with transition metal ions is disclosed in J. of Molecular Catalysis, 3 (1977/78) p. 47-50, Hulsbergen et al.

The trialkyl phosphine oxide based methods have substantial flaws; for example, when using trioctylphosphine oxide (TOPO) as an extractive agent with a kerosene solvent it is necessary to add salt in order to prevent an emulsion from forming on the interface, and the presence of such a salt is undesirable. Also, the extractive agent is often partially soluble in water and thus additional processing steps are required for separation. An initial processing of the acetic acid overhead is also required to separate it from the organic carrier solvent. For example, some kerosene is distilled with the acetic acid in a TOPO - kerosene extractive system. Finally, the solvents used in these processes are usually toxic, and some solvent loss is usually inherent in the process. An excellent discussion of the problems involved can be found in two articles by Ricker et al., "Solvent Extraction with Amines for Recovery of Acetic Acid from Dilute Aqueous Industrial Streams", J. Separ, Proc. Technol., 1(2) p. 23-30 (1980) and "Solvent Properties of Organic Bases for Extraction of Acetic Acid from Water", J. Separ. Proc. Technol., 1(1) p. 36-41 (1979).

Therefore, in accordance with the above, a novel process has been developed for the treatment of liquid, particularly aqueous, solutions containing dilute amounts of carboxylic acids, particularly acetic acid, usually involving industrial and/or environmentally sensitive processes. The process involves utilizing a variety of

extractive insoluble supports, each possessing an effective amount of either trihydrocarbylphosphine oxide or heterocyclic amine sites, thereby enabling the carboxylic acid values to be extracted onto the insoluble support. Upon saturation the extractive support is surprisingly easily regenerated by driving off the acetic acid in a low cost, highly efficient separation operation, followed by recycling the support back to the acid extraction zone for future usage.

It is, accordingly, an object of the invention to provide an efficient, economical process for the substantial removal of low concentrations of carboxylic acids, particularly acetic acid, present in liquid solutions.

It is another object of the invention to provide an insoluble extractive support which is particularly effective for use in removing dilute amounts of acetic acid from aqueous solutions.

It is still another object of the invention to provide an extractive support which can be easily and efficiently regenerated and reused without losing a substantial amount of extractive capacity or without decomposition of the support.

SUMMARY OF THE INVENTION

In accordance with the aforementioned objects, a novel process for the economic treatment of liquid, particularly aqueous, solutions containing dilute amounts of carboxylic acids e.g., solutions containing from about $10^{-3}$ to 5.0 wt.% acetic acid, comprises contacting an insoluble extractive support, preferably a derivitized crosslinked polystyrene resin, possessing an effective amount, i.e., exhibiting Equilibrium Distribution Coefficients ranging from about 0.2 up to as high as about 20, preferably as high as possible, of either trihydrocarbyl phosphine oxide, preferably dialkyl benzylphosphine oxide,

most preferably di-n-octyl-benzylphosphine oxide, or heterocyclic amine, preferably imidazole and most preferably N-benzyl imidazole sites, with a carboxylic acid containing stream in an acid extraction zone.

Upon saturation the extractive support can be regenerated, preferably by contacting with a hot solvent wash, e.g., heated air, in a regeneration zone before being placed back on stream for further acid contacting.

DETAILED DESCRIPTION OF THE INVENTION

As disclosed below and outlined in Figure 1, a particularly preferred embodiment of the process of the invention has been set forth. However, many other equivalent embodiments are suitable, as will be apparent from the following detailed description.

Figure 1 discloses a simplified outline of the preferred embodiment of the process. An extractive insoluble support has been derivitized with trihydrocarbyl phosphine oxide sites, so that the support exhibits an Equilibrium Distribution Coefficient which ranges from about 0.2 to 20, preferably, of course, as high as possible. Equilibrium Distribution Coefficient has its conventional definition:

$$EDC = \frac{\text{Amount of acid absorbed by fresh support at equilibrium}}{\text{Amount of acid in solution at equilibrium}}$$

The support is preferably an extractive organic resin, which is contacted in an acid extraction zone with a dilute solution of carboxylic acid and substantially extracts the dilute acid values, e.g., about $10^{-3}$ to 5.0 wt. % present in the liquid stream. The substantially deacidified stream exits the extraction zone and proceeds onwards, while the support upon becoming saturated is taken off stream and regenerated in a suitable regeneration zone by any one of a variety of methods, such as contacting with a hot organic solvent, hot nitrogen or air, and eventually put back on stream in an extraction zone for further usage in the, preferably continuous process. Also, a hot alcohol or an

aqueous basic stream can be used to remove the extracted acid and form an ester; e.g., methyl acetate is produced by contacting the extracted acetic acid on a support with a methanol stream in the presence of an acid catalyst.

In the broadest embodiment of the invention, a class of carboxylic acids represented by the formula RCOOH, where R can be hydrogen, a linear or branched chain alkyl containing from 1 to 100 carbons, or a substituted linear or branched substituted chain alkyl of 1 to 100 carbons, are suitable for extraction. Representative acids which may be recovered by the process are formic, acetic, propionic, butyric, lactic, crotonic, glycolic, trifluoroacetic, pyruvic, methacrylic, maleic, fumaric, cyanoacetic, succinic, diglycolic, and the like. The liquid solution containing the acid or acids to be recovered may additionally include a wide variety of dissolved or suspended substances which do not interfere with the subsequent extraction of the acid onto the extractive support. Whether or not other organics coextract with the acid is immaterial to the instant invention. If such coextraction does occur and it is desired to separate the recovered acid upon completion of the process, this can be done in a number of ways apparent to those skilled in the art. Since it is envisioned that the primary utility of the present process will be as a late state cleanup step before disposal or recycle of an aqueous effluent, coextraction of other organics present will generally be advantageous.

Although it is envisioned that the dilute acid values to be removed will generally be extracted from aqueous solutions, in the broadest embodiment liquids which may be deacidified can comprise aromatics, nitriles, esters, alcohols, ketones, ethers and the like, as well as mixtures thereof. Suitable representative substances are toluene, acetonitrile, amyl acetate, methanol,

diethylketone, dibutylether and the like.

A variety of extractive organic supports are suitable for use in the process, with the most preferred support being a member of a class of organic resins including polystyrene, polybutadiene, polyphenylene, polypropylene, polyethylene and various copolymers thereof. It is most preferred that the resins are crosslinked with any one of a number of crosslinking agents known to those in the art, e.g., divinylbenzene, so as to make the resin insoluble. The organic extractive resins suitable for use can be either macroreticular or microporous in structure. In the broadest embodiment of the invention any insoluble support which is chemically bonded to the extractive trihydrocarbyl phosphine oxide or heterocyclic amine can be suitable, e.g., activated carbon, alumina, silica and the like. Alumina and silica can be functionalized with a trihydrocarbyl phosphine by the method disclosed in U.S. Patent 4,151,114. The extractive agent anchored to the support can then be oxidized by oxygen or hydrogen peroxide.

An activated carbon can be functionalized with a trialkylphosphine, a triarylphosphine or a mixed arylalkyphosphine by the method disclosed in U.S. Patent 4,325,834. The phosphine can also be oxidized to the corresponding phosphine oxide by air or hydrogen peroxide in the same manner.

The extractive resins most preferred for use in the process of the invention can be derivitized in the manner disclosed in the publication, Phase Transfer Catalysis in the Chemical Modification of Polymers, Part III, Preparation of Unsymetrical Tertiary Phosphine Oxides, T.D. Niguyen, et al., Bulletin De la Societe Chimique de France, 1982, No. 9-10. The most preferred resin is a polystyrene-divinylbenzene copolymer, with the derivitization proceeding as below:

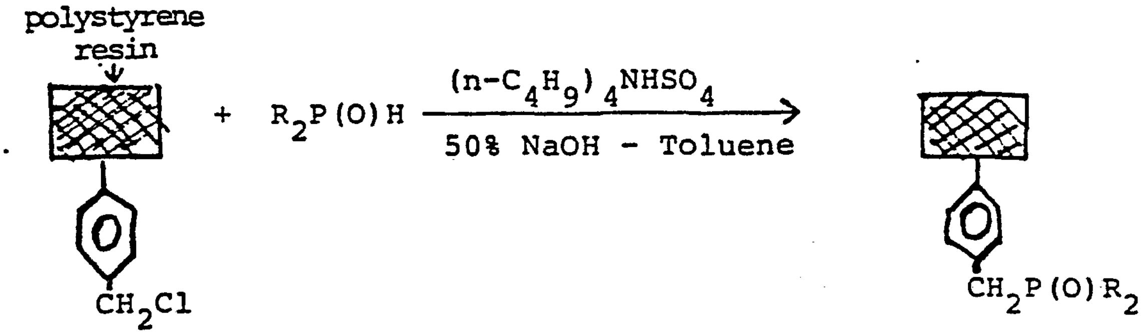


Other suitable methods are the alkylation of the Grignard reagent $R_2P(O)MgX$ with the chloromethylated polystyrene or the reaction of the chloromethylated polystyrene with alkali metal salts or disubstituted phosphinites. However any synthesis which can produce members of the above identified class of resins is also adaptable for use in the process of the invention.

The aforementioned phosphine oxide, $R_1R_2R_3P=O$, can be attached to the insoluble support through $R_1$, $R_2$ or $R_3$, as is seen below for $R_1$, e.g.

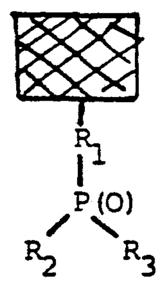

Either $R_1$, $R_2$ and/or $R_3$ can comprise an alkyl, alkylaryl, cycloalkyl, cycloalkylaryl, aryl, aralkyl or an aracycloalkyl group, each containing from about 1 to 100 carbons, and preferably about 5 to 50 carbons. The total number of carbon atoms present in the R group, in sharp contrast to prior art solution extraction methods where the phosphine oxide moiety is required to be soluble in the organic phase, isn't critical in this system. Some specific trihydrocarbyl phosphine oxide moieties which can be effectively attached to polymer supports are: benzyldioctylphosphine oxide, tri-n-octylphosphine oxide,

benzyldimethylphosphine oxide, benzyldibutylphosphine oxide, benzyldiphenylphosphine oxide, dioctylphenylphosphine oxide, dibutylphenylphosphine oxide, tridecylphosphine oxide, triphenylphosphine oxide, diphenyloctylphosphine oxide, naphthyldioctylphosphine oxide, tritolylphosphine oxide, tricyclohexylphosphine oxide, cyclooctyldioctylphosphine oxide, cyclooctylphenyloctylphosphine oxide, 2-phenylethyldioctylphosphine oxide, 3-chloropropyldioctylphosphine oxide, 3-cyanopropyldioctylphosphine oxide and 2-trifluoromethylethyldioctylphosphine oxide. Benzyldialkylphosphine oxides such as di-n-octylbenzylphosphine oxide and benzyldibutylphosphine oxide analogues attached to suitable insoluble supports are particularly preferred.

Molecules from the class of heterocyclic amines are also suitable for derivitization onto the insoluble supports, particularly imidazole and most particularly N-hydrocarbyl imidazole and its derivatives. The generic formula can be represented as

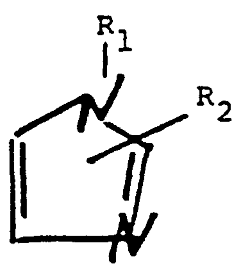

where $R_1$ and $R_2$ can be hydrogen, alkyl, alkylaryl, cycloalkyl, cycloaryl, aryl, araalkyl, or an aracycloalkyl group, each group containing from about 1-100 carbons, and preferably 5-50 carbons. Some representative examples are the most preferred compound, N-benzyl-imidazole, 2-propyl-imidazole, N-benzyl-2-propyl imidazole, N-benzylbenzimidazole, N-benzyl-2-octyl imidazole, N-benzyl-2-amyl imidazole, N-butyl-2-ethyl imidazole, N-cyclooctyl-2-methyl imidazole, N-dodecyl-2-octyl imidazole, N-phenyl-2-octyl imidazole, and N-octyl-2-phenyl imidazole.

Other heterocyclic amines and their hydrocarbyl derivatives such as pyridine, pyrrole, oxazole, thiazole, pyrazole, 1,2,3-triazole, 1,2,4-triazole, tetrazole, and the like can be derivitized unto a support.

The preparation of derivitized imidazole polymers can proceed as outlined below:

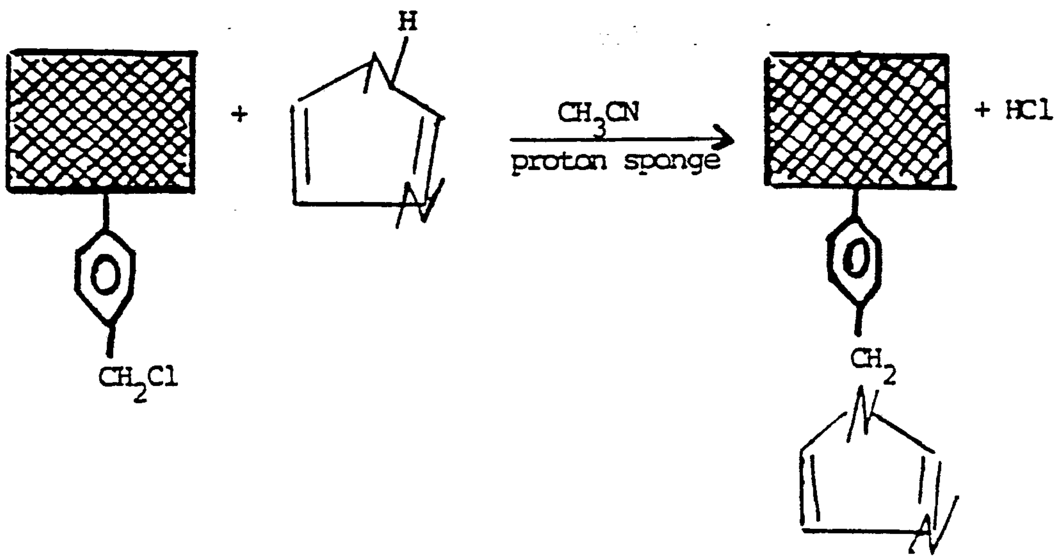


In this case the non-nucleophilic, strongly basic "sponge" [1,8-bis(dimethylamino)naphthalene] takes up the hydrochloric acid as it is formed.

Referring to Figure 1, a liquid, most commonly an aqueous stream containing dilute amounts, e.g., about $10^{-3}$ to 5.0 wt. % of carboxylic acid, most preferably acetic acid in amount of about 0.1 to 2.0 wt. %, such as that which might exit from a biological waste treatment plant, is introduced via line 2 into an acid extraction zone 4. After being contacted with the acid containing stream the now substantially deacidified stream exits the zone through line 6 and proceeds onwards, while the disclosed extractive support in extraction zone 4 gradually is saturated, until the acid containing stream is diverted into line 8 and contacted with a fresh catalyst extractive support in a parallel extraction zone 10 while the exhausted,

now off stream support in zone 4 is regenerated. It is preferred that in conjunction with such a process there be present a sufficient number of parallel extraction zones each containing activated catalyst supports, with each zone being capable of being switched on and off stream when desired. When a particular extractive support becomes acid saturated the acid bearing stream is switched to a suitable fresh extraction zone while the acid saturated support is taken off stream and regenerated for later use. In such a manner the process can be run continuously, and for industrial purposes this is so preferred, although batch techniques can also be effectively utilized. Referring back to the Figure, the support can be regenerated and the recovered acid removed from the zone through line 12, most preferably by contacting with a hot, e.g., preferably 120-160°C stream 14 of air in the case of acetic acid, although a variety of other organic extractive fluids such as acetonitrile can be used. The regenerating fluid stream is fed from line 14 through regeneration zone 10 and can also be diverted to zone 4 through line 16 when that zone requires regeneration. Although hot air is preferred as the acid removing agent, a variety of other gases including helium, argon, other inert gases, oxygen, nitrogen and the like may be adaptable for use in the process. Other suitable regeneration techniques are washing the resin with a minimum amount of hot water to obtain a concentrated acid solution, distilling the acid from a solvent in which it forms an azeotrope, such as m-xylene in the case of acetic acid, the use of an aqueous solution of a weak base, and the use of an alcohol in conjunction with an acid catalyst to form an ester. An additional advantage of the process is that the extractive supports are easily regenerated by simply contacting with a hot fluid stream.

Upon completion of the regeneration operation, the

reactivated extractive support is suitable for use in an onstream extraction zone in the process, and such a cycle can be repeated indefinitely.

From the above discussion it can be seen that the simplified embodiment of the invention provides a novel, economic and extremely efficient method for recovering chemical values from both aqueous and non-aqueous streams containing dilute amounts of carboxylic, and particularly acetic acid values. The dilute acid values can be extracted and either converted to concentrated acid at significantly reduced costs or otherwise disposed of, when contrasted with the expensive separation techniques required by using prior art solvent extraction methods. An important benefit of the process is that the recovered acid values are isolated in a concentration of 30-80% acid with a minimum of effort. Such carboxylic acids are in their own right chemicals of great value, and their recovery, even at low volumes of production, is a valuable additional benefit of the process.

The following examples are provided to illustrate the invention in accordance with the principles of this invention but are not construed as limiting the invention in any way except as indicated by the appended claim.

EXAMPLES

Preparation of a Dioctylphosphine Oxide Functionalized Polystyrene Polymer

A 20% crosslinked chloromethylated styrene-divinylbenzene copolymer (20.0g) with 4.46% chloride substitution (1.26 mmoles of chloride per gram) obtained from Strem Chemicals, Inc. was added to a 1-liter 3-necked flask fitted with a mechanical stirrer, thermometer, and a nitrogen inlet. De-oxygenated toluene (250g), di-n-octylphosphine oxide (29.0g, 106 mmole), 50 wt. % sodium hydroxide (30.0g) and 0.6g tetrabutylammonium hydrogen sulfate (1.8 mmole) were then added in this order. The

flask was heated at 100°C for 80 hours with gentle overhead stirring. At the end of this time the polymer was filtered and washed with ten 200 ml portions of water, eight 200 ml portions of 1:1 water-acetonitrile, ten 100 ml portions of acetonitrile, and ten 100 ml portions of methanol. The polymer was then dried in an oven at 40°C under vacuum. Elemental analysis of the polymer indicated 1.19% phosphorus (0.38 mmole) and 1.83% chloride (0.52 mmole).

Preparation of a Dibutylphosphine Oxide Functionalized Polystyrene Polymer

A dibutylphosphine oxide functionalized resin was prepared similarly to the dioctylphosphine oxide functionalized resin.

An identical 20% crosslinked chloromethylated (4.46% chloride) styrene-divinylbenzene copolymer as that used in Example 1 (20.0g) was added to 200g toluene, dibutylphosphine oxide (17.0g, 105 mmole), 30.0g 50% sodium hydroxide and 0.5g tetrabutylammonium hydrogen sulfate (1.5 mmole) which had previously been purged with nitrogen. The mixture was stirred for 20.0 hours at 100°C. At the end of this time the reaction mixture was filtered and the insoluble polymer was washed with ten 200 ml portions of water, eight 200 ml portions of 1:1 water-acetonitrile, ten 100 ml portions of acetonitrile, and ten 100 ml portions of methanol. The polymer was vacuum dried at 50°C for 0.5 hr. Analysis: %$Cl^-$ = 4.1% and %P = 1.86%.

Preparation of an Imidazole Functionalized Polymer

10.0g of chloromethylated 20% polystyrene-divinylbenzene (4.80% Cl), 100.0g acetonitrile, imidazole (4.6g, 67 mmoles), and 1,8-bis (dimethylamino) naphthalene (3.0g, 14 mmoles) were added to a 250-ml 3-necked round bottom flask fitted with a condenser, thermometer, and a

mechanical stirrer. The mixture was heated for 64 hours at 82°C. The mixture was cooled and filtered at room temperature. The polymer was then washed with five 100 ml portions of toluene, five 100 ml of acetonitrile, five 100 ml of methanol, five 100 ml of water, and three 100 ml of methanol. The polymer was then dried under vacuum at 50°C. Elemental analysis of the polymer indicated 2.08% nitrogen (0.75 mmole).

EXAMPLE 1

The functionalized polymer (18.3g) was loaded into a column having a 1.5 cm i.d, and a 2.1% acetic acid solution in water was run through the column. Aliquots were taken from the column in 3 ml portions and titrated with standardized 0.01N sodium hydroxide. The polymer absorbed 3.0 mmoles of acetic acid, or 0.16 mmoles per g polymer, and yielded an equilibrium distribution coefficient of 0.48.

In all the examples illustrated the distribution coefficient is defined as quantity of acid absorbed by the dry resin divided by quantity of the acid in the aqueous solution at equilibrium.

The column used above was equipped with a jacket in which heated silicon oil could be circulated with a pump and a hot gas such as nitrogen could be run through the polymer from the bottom of the column up to a U-tube at the top. A cold trap of dry ice was used to trap the acetic acid.

The column was heated to 100°C with a 10 ml per minute nitrogen flow to expel traces (0.05g) of absorbed water. The column was then heated to 150°C to expel the acetic acid. A 0.10N sodium hydroxide determination of acetic acid and a Karl Fischer determination of water content gave 2.8 mmoles of acetic acid (93% recovery) with a concentration of 30% acetic acid in water. The polymer was then washed with methanol (100 ml), water

(100 ml), and, finally, methanol (100 ml). It was dried at 40°C under vacuum.

EXAMPLE 1 - FIRST RECYCLE

The trialkylphosphine oxide derivitized polymer from the first cycle (17.1g) was again exposed to a 2.0% acetic acid solution in water which was run through the column and collected at the bottom of the column in 3 cc aliquots. The polymer absorbed 2.85 mmoles of acetic acid, or 0.17 mmoles per g of polymer, and yielded a distribution coefficient of 0.49.

The column was heated to 100°C, and subsequently to 150°C with a nitrogen flow of 50 ml/min as in Example 1. 2.6 mmoles of acetic acid (91% recovery) with a concentration of 35% acetic acid in water was recovered.

The polymer was then washed with methanol, water and methanol again, and dried at 40°C under a 60 mm Hg vacuum as in Example 1.

EXAMPLE 1 - SECOND RECYCLE

2.0% aqueous acetic acid solution was again run through the column at room temperature. 2.84 mmoles of acetic acid were absorbed by the polymer, yielding a distribution coefficient of 0.49.

The column was then heated to 100°C with a 50 ml per minute nitrogen flow to give traces of water, followed by heating to a temperature of 150°C. 2.65 mmoles of acetic acid were expelled (93% recovery) with a concentration of 36% acetic acid in water.

The polymer was then washed with methanol, water, and finally methanol, as before. It was dried at 40°C under 60 mm Hg vacuum. It was then ready to be recycled again. The elemental analysis of the polymer was 1.15% phosphorous (no change from the initial polymer, within experimental error).

The microporous polymers, where so indicated in the following Table of Results covering Examples 2-18 and the

various recycles accompanying the examples, were reacted with the dilute aqueous acid in a round bottomed flask in a batch reaction in the presence of an organic cosolvent such as toluene or carbon tetrachloride.

TABLE 1

| Ex-ample | Func. (%) | Acid (%) | Solvent | Dist. Coeff. | Regeneration Conditions | % Recovery of Acid (Reg) | % Acid in Solvent (Reg) |
|---|---|---|---|---|---|---|---|
| 2 | 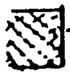$-C_6H_4CH_2P(O)(C_8H_{17})_2$ (1.19%P) | formic acid (2.1%) | water | 0.43 | 35°C, 35 mm | 3 | |
| 3 | " (1.19%P) | propionic acid (1.0%) | water | 1.70 | 150°C w/nitrogen | 9 | 18 |
| 4 | " (1.03%P) | acetic acid (0.05%) | water | 0.40 | m-xylene-acetic acid azeotrope | | |
| 4 | recycle | acetic acid (0.05%) | water | 0.45 | " | | |
| 5 | " (1.03%P) | acetic acid (0.05%) | water | 0.52 | " | | |
| 6 | " (1.03%P) | acetic acid (1.0%) | water | 0.54 | " | | |
| 6 | recycle | acetic acid (1.0%) | water | 0.65 | " | | |
| 7 | " (1.03%P) | acetic acid (0.10%) | water | 0.38 | " | | |
| 7 | recycle | acetic acid (0.10%) | water | 0.56 | " | | |
| 8 | " macroreticular, 3% DVB - (3.9%P) | acetic acid (2.0%) | water | 1.47 | 150°C w/nitrogen | 75 | 33 |

TABLE 1
- cont.-

| Ex-ample | Func. (%) | Acid (%) | Solvent | Dist. Coeff. | Regeneration Conditions | % Recovery of Acid (Reg) | % Acid in Solvent (Reg) |
|---|---|---|---|---|---|---|---|
| 9 | " macroreticular, 3% DVB (1.2%P) | acetic acid (2.0%) | toluene | 2.10 | 150°C w/nitrogen | 91 | |
| 10 | " microporous, 1% DVB (0.82%P) | acetic acid (0.5%) | water-toluene | 1.30 | m-xylene-acetic acid azeotrope | | |
| 10 | recycle | acetic acid (0.5%) | water-toluene | 1.27 | " | | |
| 10 | recycle | acetic acid (0.5%) | water-toluene | 1.23 | " | | |
| 11 | " microporous, 2% DVB (4.22%P) | acetic acid (0.5%) | water-carbon tetra-chloride | 4.90 | " | | |
| 12 | 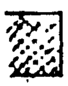 $-C_6H_4CH_2P(O)(C_4H_9)_2$ (1.86%P) | acetic acid (2.0%) | water | 0.64 | 150°C w/nitrogen | 99 | 18 |
| 12 | recycle | acetic acid (2.0%) | water | 0.66 | " | 87 | 17 |
| 12 | recycle | acetic acid (2.0%) | water | 0.59 | " | 91 | 12 |
| 13 | 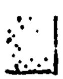 $-C_6H_4CH_2-N$ 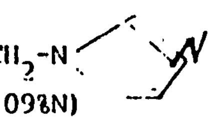 (2.09%N) | acetic acid (2.1%) | water | 1.50 | " | 57 | 12 |

TABLE 1
-cont.-

| Example | Func. (%) | Acid (%) | Solvent | Dist. Coeff. | Regeneration Conditions | % Recovery of Acid (Reg) | % Acid in Solvent (Reg) |
|---|---|---|---|---|---|---|---|
| 13 | recycle | acetic acid (2.0%) | water | 1.41 | 150°C w/nitrogen | 98 | 20 |
| 14 | " macroreticular, 3% DVB (11.1%N) | acetic acid (2.0%) | water | 8.20 | " | 50 | 9 |
| 15 | " (2.09%N) | acetic acid (2.0%) | n-amyl acetate | 3.20 | " | 77 | |
| 15 | recycle | acetic acid (2.0%) | n-amyl acetate | 3.42 | " | 79 | |
| 16 | " | acetic acid (2.0%) | methanol | 0.50 | " | 98 | |
| 17 | 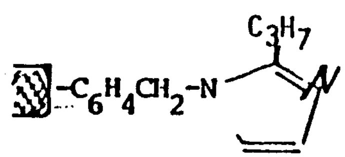 | acetic acid (2.0%) | water | 1.90 | " | 72 | 7 |
| 17 | recycle | acetic acid (2.0%) | water | 1.90 | " | 86 | 9 |
| 18 | 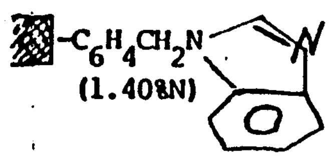 (1.40%N) | acetic acid (2.0%N) | water | 1.10 | " | 99 | 8 |

EXAMPLE 19

A chloromethylated polystyrene-divinylbenzene (2%) Merrifield resin was derivitized with dioctylphosphine oxide at 65°C (4.22% phosphorus). The polymer (10.0g) was added to 200.0g carbon tetrachloride, and 40.0g of 0.5% acetic acid in a 500 ml round bottom flask with a magnetic stirrer at room temperature. A distribution coefficient of 4.9 was found. The polymer was filtered and added to a 250 ml round bottomed flask along with 100g benzonitrile, 3.0g methanol, and 0.05g concentrated sulfuric acid. 1.6 mmoles of methyl acetate (86% of theoretical) were recovered together with the excess methanol.

EXAMPLE 19 - FIRST RECYCLE

The above polymer was recycled and the experiment repeated under identical conditions. A distribution coefficient of 4.0 was obtained.

The polymer was filtered and added to 100g benzonitrile, 3.0g methanol and 0.05g concentrated sulfuric acid. The lower boilers were distilled under 70°C to yield methyl acetate (1.2 mmoles, 73% of theoretical) and the excess methanol.

CLAIMS

1. A process for the extraction of dilute amounts of carboxylic acids from liquid solutions comprising:

contacting an insoluble extractive support possessing an effective amount of either trihydrocarbyl phosphine oxide or heterocyclic amine sites with the carboxylic acid containing solution in an acid extraction zone.

2. A process as claimed in claim 1 wherein the extractive support is regenerated in a regeneration zone and reused for further acid contacting.

3. A process as claimed in claim 2 wherein the saturated support is regenerated by contacting the support with a hot fluid.

4. A process as claimed in claim 3 wherein the hot fluid is selected from organic solvents, $N_2$, air, aqueous bases, and alcohols.

5. A process as claimed in claim 4 wherein the fluid is air at 120-160°C.

6. A process as claimed in any one of claims 2 to 5 wherein the acid values recovered from the regenerated extractive support are concentrated up to about 30 to 80 wt. % acid.

7. A process as claimed in any one of claims 1 to 6 wherein the liquid solution is selected from aromatics, nitriles, esters, alcohols, ketones, ethers, water and mixtures thereof, especially water.

8. A process as claimed in any one of claims 1 to 7 wherein the dilute amount of carboxylic acid ranges from $10^{-3}$ to 5.0 wt. % acid.

9. A process as claimed in any one of claims 1 to 8 wherein the carboxylic acid is acetic acid.

10. A process as claimed in any one of claims 1 to 9 wherein the extractive support comprises an organic resin, preferably a crosslinked polystyrene resin.

11. A process as claimed in any one of claims 1 to 10 wherein the extractive support exhibits Equilibrium Distribution Coefficients ranging from about 0.2 to 20.

12. A process as claimed in any one of claims 1 to 11 wherein the trihydrocarbyl phosphine oxide is dialkyl benzyl phosphine oxide, preferably di-n-octyl-benzyl-phosphine oxide.

13. A process as claimed in any one of claims 1 to 11 wherein the heterocyclic amine is an imidazole derivative, preferably an N-hydrocarbyl imidazole.

14. A process as claimed in claim 13 wherein the N-hydrocarbyl imidazole is an N-benzyl imidazole.

1/1

0156597

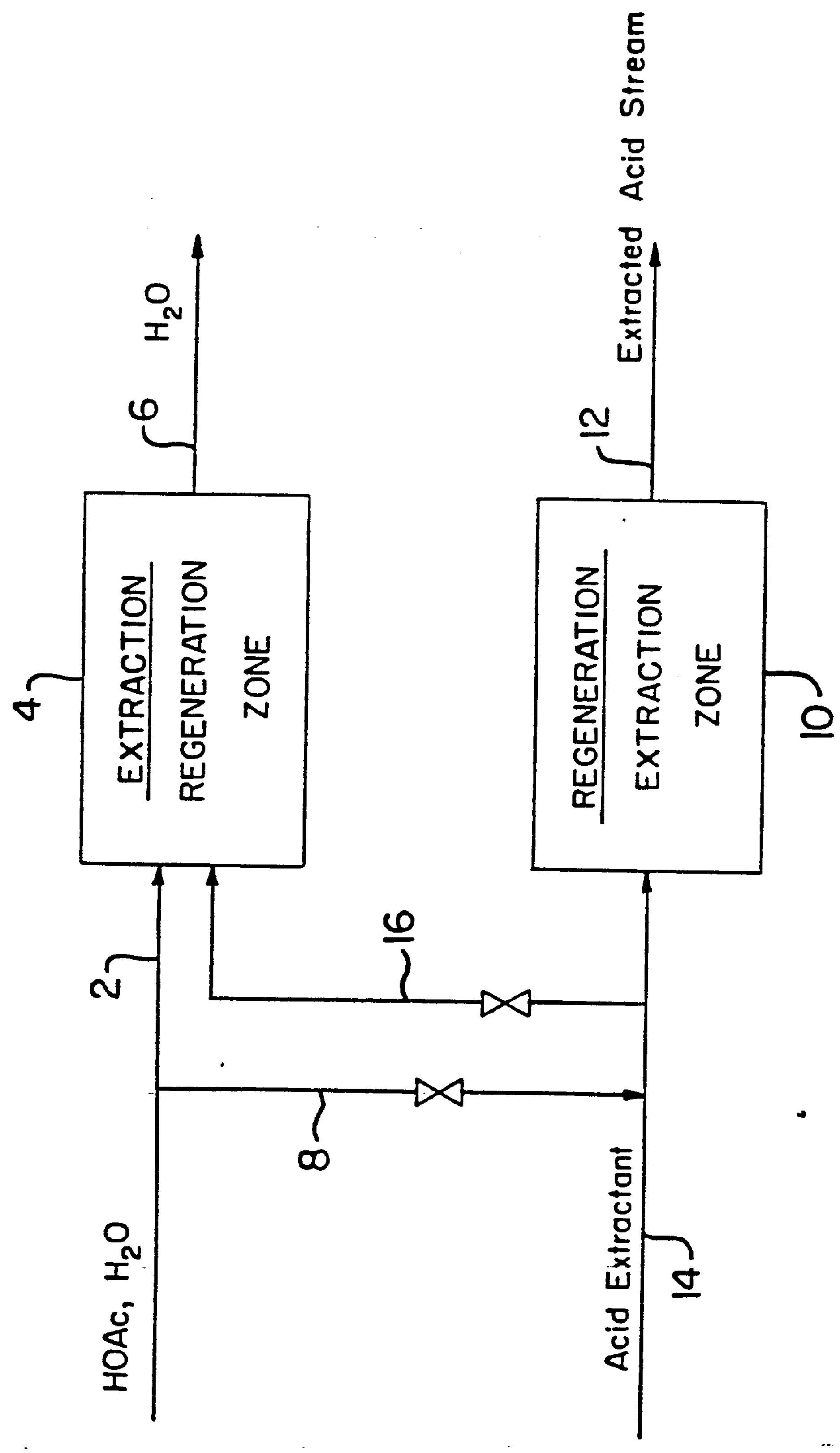

HOAc, $H_2O$
2
8
16
4
EXTRACTION
REGENERATION
ZONE
6
$H_2O$
Acid Extractant
14
10
REGENERATION
EXTRACTION
ZONE
12
Extracted Acid Stream